# FASCICULE DE BREVET EUROPEEN

(11) **EP 3 792 771 B1**
(45) Date de publication et mention de la délivrance du brevet: **30.10.2024**
(21) Numéro de dépôt: 20196222.2
(22) Date de dépôt: 15.09.2020
(51) Int. Cl.: G06F 11/36, G06F 11/34, F02D 41/22, G06F 11/30, B60L 3/10, F02D 41/24, F02D 41/26

(54) **TEST DE PROGRAMME**
PROGRAMMTEST
PROGRAMME TEST

(30) Priorité: 16.09.2019 FR 1910189
(43) Date de publication de la demande: 17.03.2021
(73) Titulaire: STMicroelectronics (Grenoble 2) SAS, 38000 Grenoble (FR)
(72) Inventeur: GOUEDO, Pascal, 38430 ST JEAN DE MOIRANS (FR)
(74) Mandataire: Cabinet Beaumont

(56) Documents cités:
- US-A- 5 560 036
- US-A1- 2013 246 770
- KLEEBERGER VEIT B ET AL: "Design & verification of automotive SoC firmware", 2015 52ND ACM/EDAC/IEEE DESIGN AUTOMATION CONFERENCE (DAC), IEEE, 8 June 2015 (2015-06-08), pages 1 - 6, XP033181729, DOI: 10.1145/2744769.2747918
- ADRIEN VERGÉ ET AL: "Hardware-assisted software event tracing : Hardware-assisted software event tracing", CONCURRENCY AND COMPUTATION: PRACTICE AND EXPERIENCE, vol. 29, no. 10, 25 May 2017 (2017-05-25), GB, pages e4069, XP055633683, ISSN: 1532-0626, DOI: 10.1002/cpe.4069
- BALAZS SCHERER ET AL: "Trace and debug port based watchdog processor", 2013 IEEE INTERNATIONAL INSTRUMENTATION AND MEASUREMENT TECHNOLOGY CONFERENCE (I2MTC), IEEE, 13 May 2012 (2012-05-13), pages 488 - 491, XP032451426, ISSN: 1091-5281, ISBN: 978-1-4673-4621-4, DOI: 10.1109/I2MTC.2012.6229331

## Description

### Domaine technique

La présente description concerne de façon générale les dispositifs électroniques programmables, et les procédés d'exécution d'instructions d'un programme.

### Technique antérieure

Un programme est constitué d'une suite d'instructions. Les instructions sont par exemples stockées dans une mémoire reliée à une unité de traitement séquentiel de données telle qu'un microprocesseur. A l'exécution du programme, des instructions peuvent être exécutées plusieurs fois, par exemple lorsque le programme comprend une boucle. Des instructions peuvent ne pas être exécutées, suite par exemple à une instruction de branchement, c'est-à-dire une instruction indiquant une partie du programme à exécuter après l'instruction de branchement.

Le document US2013246770A1 décrit un système pour contrôler le fonctionnement d'un processeur à partir d'un état moins privilégié.

Le document "Design & vérification of automotive SoC firmware", KLEEBERGER VEIT B ET AL ; 2015 52ND ACM/EDAC/IEEE DESIGN AUTOMATION CONFERENCE (DAC) décrit des développements de logiciels « firmware », et notamment leurs tests et débogages, et propose des mesures de couverture structurelle comprenant le pourcentage d'instructions logicielles (lignes de code source) qui ont été exécutées à l'aide des tests unitaires définis.

Le document "Hardware-assisted software event tracing: Hardware-assisted software event tracing", ADRIEN VERGÉ ET AL; CONCURRENCY AND COMPUTATION: PRACTICE AND EXPERIENCE décrit une méthode de traçage qui repose sur des modules matériels pour faciliter le traçage des logiciels.

Le document "Trace and debug port based watchdog processor", BALAZS SCHERER ET AL ; 2013 IEEE INTERNATIONAL INSTRUMENTATION AND MEASUREMENT TECHNOLOGY CONFERENCE (I2MTC) décrit un procédé de trace et de débogage basé sur un système de surveillance.

Le document US5560036A décrit un processeur de données ayant une fonction d'émulation de circuit. Résumé de l'invention

Il existe un besoin de savoir quelles instructions du programme sont exécutées et/ou quelles instructions ne sont pas exécutées lors de la mise en oeuvre du programme.

Un mode de réalisation pallie tout ou partie des inconvénients des dispositifs électroniques programmables usuels et des procédés usuels d'exécution d'instructions d'un programme.

Un mode de réalisation permet de réduire la taille d'une mémoire de stockage d'informations permettant de déterminer quelles instructions ont été exécutées lors d'une mise en oeuvre du programme.

L'invention concerne un procédé selon 1a revendication 1 et un dispositif selon 1a revendication 8.

L'invention prévoit un procédé comprenant une étape de sélection de zones mémoire à partir de positions, dans une mémoire, d'instructions d'un programme, de manière à associer à chacune desdites instructions à l'une des zones mémoire, les instructions occupant chacune un ou plusieurs emplacements de la mémoire, et les zones comprenant pour chaque emplacement un même nombre de bits, de préférence égal à un ou deux.

Le procédé comprend l'exécution d'au moins une partie des instructions et, pour chaque instruction exécutée, le stockage d'une valeur dans l'une des zones associée à l'instruction exécutée.

Selon un mode de réalisation, chacune des zones comprend au moins un premier bit et au moins un deuxième bit, la valeur comprenant :
- la valeur un à l'emplacement du premier bit si l'instruction exécutée a un prédicat à la valeur "vrai" ;
- la valeur un à l'emplacement du deuxième bit si l'instruction exécutée a un prédicat à la valeur "faux" ; et
- la valeur un aux emplacements des premier et deuxième bits si l'instruction exécutée n'est pas une instruction à prédicat.

Selon un mode de réalisation, le stockage est effectué parallèlement à l'exécution.

Selon un mode de réalisation, le stockage est effectué simultanément pour des instructions exécutées simultanément.

Selon invention, le procédé comprend, après l'exécution, une étape de vérification de la présence de la valeur dans chacune des zones et/ou la détection de l'absence de la valeur dans l'une des zones.

Selon un mode de réalisation, le stockage comprend l'écriture, à un emplacement de mot mémoire comprenant au moins une des zones, d'un mot ayant, en dehors de ladite au moins une des zones, le contenu de l'emplacement de mot mémoire avant l'écriture.

Selon un mode de réalisation, les zones sont situées dans au moins deux banques mémoire distinctes.

Selon un mode de réalisation, l'emplacement de mot mémoire a des bits de poids faibles situés dans l'une des deux banques et des bits de poids forts situés dans l'autre des deux banques.

Un autre mode de réalisation prévoit un dispositif configuré pour mettre en oeuvre un procédé tel que défini ci-dessus.

Un autre mode de réalisation prévoit un circuit intégré comprenant un dispositif tel que défini ci-dessus.

Selon un mode de réalisation, le circuit comprend les zones et est configuré pour exécuter les instructions.

Selon un mode de réalisation, le circuit est configuré pour être relié à une mémoire extérieure au circuit et pour transmettre le contenu des zones à la mémoire extérieure.

Un autre mode de réalisation, prévoit un dispositif comprenant la mémoire extérieure d'un circuit tel que défini ci-dessus, le dispositif étant configuré pour recevoir les contenus des zones et écrire les contenus des zones dans la mémoire extérieure.

Selon un mode de réalisation, le dispositif est configuré pour vérifier la présence de la valeur dans le contenu de chacune des zones et/ou la détection de l'absence de la valeur dans l'un des contenus .

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, schématiquement et sous forme de blocs, un mode de réalisation d'un système comprenant un dispositif programmable ;

la figure 2 représente, par une vue partielle et schématique de deux mémoires, un mode de réalisation d'un procédé mis en oeuvre lors de l'exécution d'instructions d'un programme ;

la figure 3 représente, schématiquement et sous forme de blocs, un mode de réalisation d'un dispositif programmable ;

la figure 4 représente, schématiquement et sous forme de blocs, un autre mode de réalisation d'un système comprenant un dispositif programmable ;

la figure 5 représente, par une vue partielle et schématique de deux mémoires, un autre mode de réalisation du procédé de la figure 2 ; et

la figure 6 représente, par une vue partielle et schématique de deux mémoires, un autre mode de réalisation du procédé de la figure 2.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, des unités d'un dispositif programmable, comme une unité de traitement de données, ne sont pas décrites en détail, les modes de réalisation décrits étant compatibles avec de telles unités usuelles.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

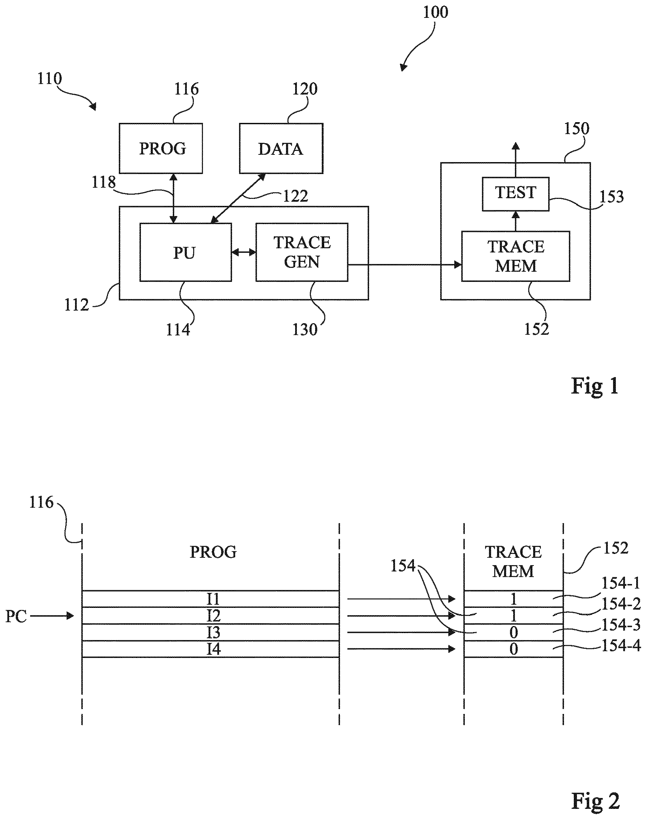

La figure 1 représente, schématiquement et sous forme de blocs, un mode de réalisation d'un système 100 comprenant un dispositif programmable 110. Le dispositif 110 peut comprendre, ou être constitué par, un circuit de type réseau de portes programmables in situ FPGA ("Field Programmable Gate Array") ou par des portes de type ASIC ("Application-Specific Integrated Circuit").

Le dispositif programmable 110 est par exemple utilisé dans une application automobile. Le dispositif programmable 110 peut alors être compris dans un ensemble tel qu'un système d'antiblocage de freins, voire un ensemble de pilotage d'une voiture autonome. Le dispositif programmable peut également être utilisé dans des applications telles que l'acquisition de données et la visualisation des données captées, ou par exemple des applications de mesure de distance par laser.

Le dispositif programmable 110 comprend un circuit 112 d'exécution de programme. Le circuit 112 est de préférence un circuit intégré. En variante, le circuit 112 comprend plusieurs circuits intégrés distincts. Un circuit intégré est défini par un boîtier contenant une ou plusieurs puces (en anglais "die"). Par puce, ou puce électronique, on entend une portion de tranche semiconductrice et des circuits électroniques situés dans et sur la tranche. Le boîtier comprend des plages de connexion ou des broches électriquement conductrices sortant du boîtier. Les plages ou les broches sont destinées à être reliées électriquement à d'autres circuits, préférentiellement soudées sur une plaque de circuit imprimé PCB ("Printed Circuit Board"). De préférence, le circuit 112 comprend une seule puce.

Le circuit 112 comprend une unité 114 de traitement de données (PU). Le circuit 112 est relié, de préférence connecté, par une liaison ou une connexion 118, à une mémoire 116 (PROG) du dispositif 110. La mémoire 116 contient les instructions du programme. Selon l'exemple représenté, la mémoire 116 est extérieure au circuit 112. Par extérieure, on entend que le dispositif 110 est fabriqué en prévoyant séparément la mémoire 116 et le circuit 112 destiné à être relié, de préférence connecté, à la mémoire 116. Selon un exemple préféré, la mémoire 116 est une mémoire interne du circuit 112, c'est-à-dire que la mémoire 116 est comprise dans le boîtier du circuit intégré, et préférentiellement sur la même puce que le circuit 112. Par exemple, la mémoire 116 est du type connu sous la dénomination à couplage étroit TCM (Tightly Coupled Memory). Dans un exemple préféré, la mémoire de programme 116 contient des mots de 64 bits et la liaison 118 est une liaison à 64 bits en parallèle. Par mot d'une mémoire, on entend une valeur numérique dont les bits sont accessibles simultanément en lecture ou en écriture dans une mémoire.

De préférence, le circuit 112 est relié, de préférence connecté, par une liaison ou une connexion 122, à une mémoire 120 (DATA) du dispositif 110. La mémoire 120 peut être extérieure au circuit 112 ou, de préférence, interne au circuit 112. La mémoire 120 peut être du type TCM. De préférence, les mémoires 116 et 120 sont deux banques (c'est-à-dire deux blocs) de mémoire distinctes, plus préférentiellement de type TCM. Les liaisons 118 et 122 sont alors de préférence distinctes. Les mémoires 116 et 120 peuvent également être des parties d'une même banque de mémoire, et les liaisons 118 et 122 sont alors une même liaison. Dans un exemple préféré, la mémoire de données 120 contient des mots de 32 bits et la liaison 122 est une liaison à 32 bits en parallèle.

Le circuit 112 comprend en outre une unité 130 (TRACE GEN) configurée pour générer une trace du programme. Par trace du programme, on entend un ensemble d'informations permettant une distinction entre les instructions n'ayant pas été exécutées et les instructions ayant été exécutées par le programme. La trace du programme est générée pendant l'exécution du programme. La trace permet alors de distinguer entre les instructions n'ayant pas été exécutées et les instructions ayant déjà été exécutées par le programme.

Le système 100 comprend en outre un dispositif 150 relié, de préférence connecté, au dispositif 110. Le dispositif 150 permet de tester le fonctionnement du dispositif 110 avant que celui-ci soit utilisé dans une application. Le dispositif 150 peut être une plateforme d'essais, ou une plateforme de développement du dispositif programmable 110. A titre d'exemple, le dispositif 150 permet en outre de programmer le dispositif programmable 110. Selon un mode de réalisation, le dispositif 150 comprend une mémoire 152 (TRACE MEM) destinée à recevoir la trace. La mémoire 152 est alors extérieure au circuit 112. Le dispositif 150 peut en outre comprendre un circuit 153 (TEST) relié, de préférence connecté, à la mémoire 152. Le circuit 153 comprend préférentiellement une unité d'exécution d'un logiciel (c'est-à-dire un autre programme) de test du programme contenu dans la mémoire 116. Une telle unité peut comprendre un microprocesseur. En variante, le circuit 153 permet de transmettre, par exemple par un réseau de communication, le contenu de la mémoire 152 à un autre circuit, non représenté, configuré pour mettre en oeuvre le logiciel de test.

Le dispositif 110 et/ou le dispositif 150 peut comprendre en outre une unité de débogage (en anglais "debugger unit") non représentée, destinée typiquement à permettre l'exécution du programme pas à pas et/ou à générer des informations concernant la valeur de variables du programme et/ou à mettre en place des points d'arrêt dans le programme.

En fonctionnement, le programme est mis en oeuvre une fois, ou plusieurs fois, de préférence avec des valeurs de données différentes utilisées par le programme. Les instructions du programme sont exécutées par l'unité 114. La trace est générée par l'unité 130 pendant la ou les mises en oeuvre du programme. La trace obtenue est stockée dans la mémoire 152. A partir de la trace stockée dans la mémoire 152, le circuit 153 détermine, par exemple en mettant en oeuvre le logiciel de test, si certaines des instructions n'ont pas été exécutées lors de la mise en oeuvre du programme, et éventuellement, le cas échéant, quelles sont ces instructions.

La figure 2 représente, par une vue partielle et schématique des mémoires de programme 116 (PROG) et de stockage de trace 152 (TRACE MEM) du dispositif de la figure 1, un mode de réalisation d'un procédé mis en oeuvre lors de l'exécution d'instructions du programme. Notamment, l'exécution est mise en oeuvre par le circuit 112. Plus précisément, le programme est exécuté une ou plusieurs fois et le circuit 130 génère la trace de la manière décrite en relation avec la figure 1.

La mémoire 116 comprend les instructions I successives du programme. Quatre instructions I (I1, I2, I3 et I4) sont représentées à titre illustratif, mais les modes de réalisation décrits s'appliquent à un nombre quelconque d'instructions du programme.

L'unité 114 comprend typiquement un compteur de programme PC ("program counter"), encore appelé pointeur d'instruction ("instruction pointer") ou compteur ordinal. Le compteur de programme PC désigne ici un registre qui contient l'adresse mémoire du début de l'instruction en cours d'exécution. Cependant, en variante, ce registre peut contenir l'adresse mémoire du début de l'instruction à exécuter après l'instruction en cours d'exécution. Dans l'exemple représenté, le compteur de programme contient l'adresse mémoire du début de l'instruction I2.

Des zones mémoire 154 (154-1, 154-2, 154-3, 154-4), chacune constituée d'un ou plusieurs bits de la mémoire 152, sont sélectionnées à partir des positions des instructions I. Par positions des instructions, on entend des valeurs ayant le même ordre que celui des instructions dans la mémoire 116. Ainsi, les zones mémoire 154 sont déterminées en fonction des positions des instructions dans la mémoire. A chaque instruction I du programme, on a ainsi associé une des zones 154. Des instructions distinctes correspondent à des zones 154 distinctes et disjointes c'est-à-dire sans partie commune. De préférence, comme ceci est représenté, les zones 154 sont placées dans la mémoire 152 dans le même ordre que les instructions I dans la mémoire 116. Ceci n'est pas limitatif, les zones 154 pouvant être placées dans un ordre différent.

La position de chaque instruction peut être définie par l'adresse mémoire du début de l'instruction. Au cours de l'exécution du programme, chaque zone mémoire 154 peut alors être sélectionnée en fonction de l'adresse mémoire du début de l'instruction exécutée. Autrement dit, l'adresse mémoire du début de la zone 154 associée à l'instruction exécutée peut être déterminée à partir du compteur de programme PC.

Avant la ou les mises en oeuvre du programme permettant de générer la trace, on remplit la mémoire de trace 152 de premières valeurs, plus préférentiellement une même première valeur, par exemple un niveau logique bas (0). Ceci n'est pas limitatif, les premières valeurs pouvant être les valeurs initialement contenues dans la mémoire de trace.

Pour chaque instruction exécutée, on stocke une deuxième valeur différente de la première valeur. Dans l'exemple d'une première valeur à un niveau logique bas, la deuxième valeur a de préférence un niveau logique haut (1). Ainsi, les zones 154 associées aux instructions I non encore exécutées (dans l'exemple représenté, les zones 154-3 et 154-4 associées aux instructions I3 et I4) contiennent la première valeur. Les zones 154 associées aux instructions I déjà exécutées (dans l'exemple représenté, les zones 154-1 et 154-2 associées aux instructions I1 et I2) contiennent la deuxième valeur. En particulier, les zones 154 associées à des instructions I ayant déjà été exécutées plusieurs fois contiennent la deuxième valeur. Ceci n'est pas limitatif, en particulier on peut utiliser plusieurs deuxièmes valeurs différentes de la première valeur pour diverses exécutions de l'instruction.

Après que la trace ait été obtenue, pour chacune des zones 154 associées à au moins une partie du programme, le circuit 153, par exemple en exécutant le logiciel de test, vérifie si la zone 154 contient la ou l'une des deuxièmes valeurs, ou détecte si la zone 154 contient la première valeur. Si l'une des zones 154 contient la première valeur, ceci signifie que l'instruction associée n'a pas été exécutée. Le circuit 153 détecte ainsi, le cas échéant, la présence d'instructions non exécutées.

On aurait pu penser obtenir une trace en enregistrant les positions successives du compteur de programme PC. Cependant, du fait que des instructions sont répétées, la trace ainsi enregistrée aurait occupé une place en mémoire, par exemple de plusieurs gigaoctets, beaucoup plus importante que celle de la trace obtenue par le procédé décrit ci-dessus.

Par comparaison, le fait d'obtenir une trace dans des zones mémoires sélectionnées à partir des positions des instructions du programme permet de limiter la taille de la trace. En particulier, on évite d'avoir à recopier dans la mémoire de stockage de la trace l'adresse de l'instruction exécutée. Ainsi, la taille de la trace peut être inférieure par exemple à 100 kilooctets, voire à 10 kilooctets. Plus particulièrement, la taille de la trace dépend seulement de la taille du programme, et ne dépend pas de la durée d'exécution du test. Dans un exemple, la taille de la trace est égale au huitième de celle du programme. On a ainsi avantageusement obtenu une mémoire 152 de stockage de trace ayant une taille considérablement plus faible que celle des mémoires de stockage des traces obtenues en enregistrant les positions successives des instructions exécutées.

De préférence, le programme est conçu de sorte que toutes les instructions du programme sont exécutées. Ceci permet d'éviter, en particulier, que des parties non exécutées du programme puissent constituer des points d'entrées d'une attaque ou risquent de faire entrer le programme dans un comportement inconnu. Une telle attaque viserait par exemple à provoquer l'exécution d'un autre programme permettant à l'attaquant de prendre le contrôle du dispositif 110. Afin de vérifier que le programme obtenu en pratique a bien toutes ses instructions exécutées, on prévoit typiquement un ou plusieurs tests de validation dans lesquels il faut vérifier que 100 % des instructions sont exécutées lorsque le programme est exécuté au cours du ou des tests avec des données prédéfinies utilisées par le programme.

Le circuit 153 permet alors de vérifier que le programme obtenu en pratique a bien toutes ses instructions exécutées. Ainsi, la trace obtenue par le procédé décrit ci-dessus permet au dispositif de passer avec succès le test de validation.

Les instructions I sont associées de manière biunivoque aux zones 154 sélectionnées, c'est-à-dire qu'à chaque zone 154 sélectionnée est associée à une et une seule instruction I. En cas de détection d'une ou plusieurs zones 154 associées à une ou plusieurs instructions non exécutées, ceci permet de repérer, à partir de cette ou de ces zones 154, la ou les instructions non exécutées. Ceci permet que la ou les instructions non exécutées soient signalées par le circuit 153. L'information concernant la ou les instructions non exécutées peut être par exemple utilisée pour modifier le programme, ou pour modifier le ou les tests ou définir de nouveaux tests, en sorte que toutes ses instructions soient exécutées après modification. Cette information peut aussi être utilisée pour déterminer un niveau de risque d'attaque ou de comportement inconnu du programme dû aux instructions non exécutées.

De préférence, les zones 154 sont contiguës dans la mémoire 152. Ainsi, les zones 154 associées aux instructions correspondent à une plage continue, ou à la totalité, de la mémoire 152. Par rapport à une variante dans laquelle des zones 154 sont séparées par des espaces, ceci permet que, une fois la trace obtenue, toutes les zones de la plage contenant la première valeur correspondent à une instruction non exécutée. Ainsi, la détection des instructions non exécutées est facilitée par rapport à des zones 154 séparées.

De préférence, le stockage de la trace est effectué parallèlement à l'exécution des instructions, c'est-à-dire que, pour chaque instruction exécutée, la sélection de la zone 154 et le stockage de la deuxième valeur dans la mémoire 152 sont effectués pendant l'exécution de l'instruction. Ceci permet avantageusement d'obtenir la trace sans ralentir l'exécution du programme.

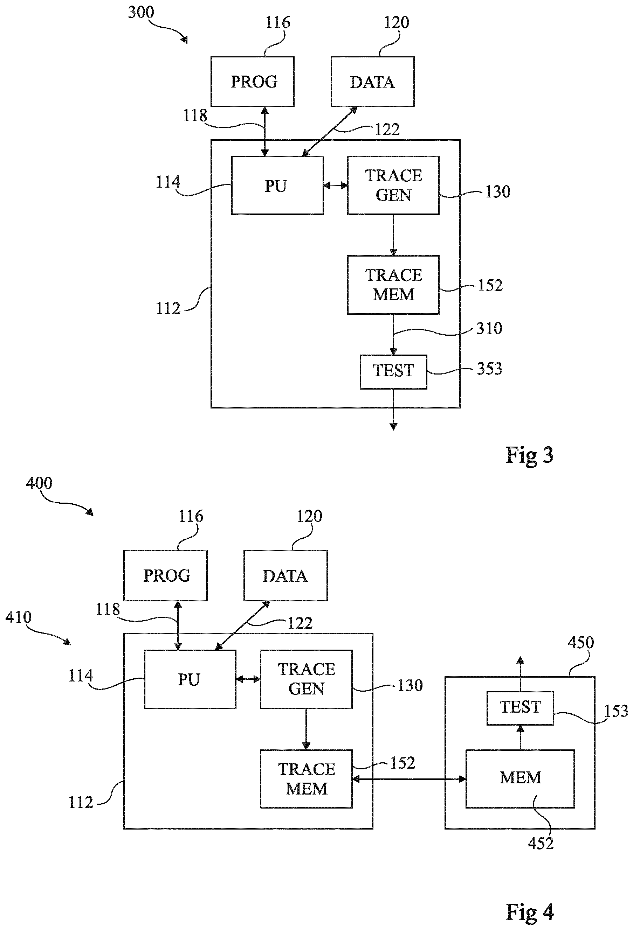

La figure 3 représente, schématiquement et sous forme de blocs, un mode de réalisation d'un dispositif 300 programmable. Le dispositif 300 comprend des éléments identiques ou similaires à ceux du système 100 de la figure 1, reliés de manière identique ou similaire. Ces éléments ne sont pas décrits ici à nouveau, et seules les différences sont mises en exergue.

Le dispositif 300 comprend les éléments du dispositif 110 de la figure 1, à savoir les mémoires 116 et 120 et les unités 114 et 130 comprises dans le circuit 112. Le dispositif programmable 300 diffère du dispositif programmable 110 de la figure 1 en ce que le circuit intégré 112 comprend la mémoire 152 et un circuit 353 (TEST). Le circuit 353 remplace le circuit 153 de la figure 1 et est configuré pour mettre en oeuvre tout ou partie des fonctions du circuit 153.

Comme mentionné ci-dessus, la mémoire 152 a une taille réduite. Ceci a l'avantage de faciliter l'intégration de la mémoire 152 dans le circuit intégré 112. Une telle mémoire 152 interne au circuit 112 permet, par rapport à une mémoire extérieure telle que celle de la figure 1, de simplifier l'écriture des données, en particulier de se passer d'une horloge extérieure au dispositif 110 (figure 1) destinée à synchroniser l'écriture de la trace dans la mémoire 152. Ceci permet également d'éviter le risque de perdre une partie de la trace suite par exemple à des problèmes de synchronisation et/ou d'encombrement de la liaison entre le circuit 130 et la mémoire 152. De tels encombrements peuvent se produire, par exemple, si cette liaison comprend un bus de liaison entre plusieurs dispositifs électroniques. Ceci permet également de réduire avantageusement le nombre de broches sur le boîtier du circuit intégré 112, car la liaison entre le circuit 130 et la mémoire 152, permettant le transfert en parallèle de plusieurs bits, est alors une liaison 310 interne au circuit intégré 112.

Le stockage d'une trace en parallèle de l'exécution des instructions du programme peut être réalisé en dehors d'un test de validation du programme, par exemple lors du fonctionnement du dispositif programmable 300 dans une application. Ceci présente l'avantage de permettre de surveiller le fonctionnement du programme mis en oeuvre dans l'application. Le fait que la mémoire 152 soit interne au circuit 112 permet de simplifier l'obtention de la trace du programme lorsqu'il est mis en oeuvre dans l'application.

La figure 4 représente, schématiquement et sous forme de blocs, un autre mode de réalisation d'un système 400 comprenant un dispositif programmable 410. Le système 400 comprend en outre un dispositif 450. Les dispositifs 450 et 410 comprennent des éléments du système 100 de la figure 1, reliés de manière identique ou similaire. Ces éléments ne sont pas décrits ici à nouveau, et seules les différences sont mises en exergue.

Le dispositif 450 correspond au dispositif 150 de la figure 1, dans lequel la mémoire 152 a été remplacée par une mémoire 452 (MEM) adaptée à recevoir la trace obtenue et à stocker cette trace. En particulier, pour chacune des zones 154 de la mémoire 152 associées à au moins une partie du programme, le circuit 153 du dispositif 450 vérifie si une zone de la mémoire 452 correspondant à la zone 154 contient la ou l'une des deuxièmes valeurs, ou détecte si cette zone de la mémoire 452 contient la première valeur.

Le dispositif programmable 410 comprend les éléments du dispositif 110 de la figure 1, à savoir les mémoires 116 et 120 et les unités 114 et 130 comprises dans le circuit 112. Le dispositif programmable 410 diffère du dispositif programmable 110 de la figure 1 en ce que le circuit intégré 112 comprend la mémoire 152. Le dispositif 410 est destiné à être relié à la mémoire 452, extérieure au dispositif 410. Le dispositif 410 est configuré pour, une fois relié à la mémoire 452 et une fois la trace obtenue, transmettre la trace, c'est-à-dire le contenu des zones 154 (figure 2), à la mémoire 452.

Le dispositif 450 peut avoir les mêmes fonctionnalités que le dispositif 150 de la figure 1. En outre, du fait que la mémoire 152 est intérieure au circuit 112, on bénéfice de l'avantage, mentionné en relation avec la figure 3, d'éviter le risque de perdre une partie de la trace suite à des problèmes de synchronisation et/ou d'encombrement. On bénéficie donc à la fois de cet avantage et des fonctionnalités d'une plateforme d'essais.

Dans une variante, le dispositif 450 comprend en outre le circuit 353 du dispositif 300 de la figure 3.

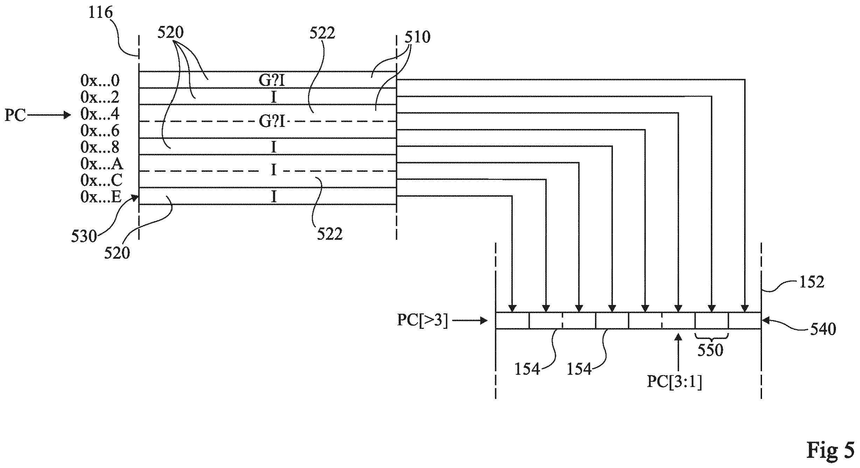

La figure 5 représente, par une vue partielle et schématique d'un mode de réalisation des mémoires de programme 116 et de stockage de trace 152 du dispositif de la figure 1, un autre mode de réalisation du procédé de la figure 2.

La mémoire 116 comprend des emplacements mémoire 510 successifs. Par emplacements mémoire, on entend des parties distinctes d'une mémoire ayant chacune un nombre prédéfini de bits, autrement dit une taille prédéfinie. Tous les emplacements ont préférentiellement la même taille. Huit emplacements successifs 510 sont représentés.

La taille des emplacements 510 est de préférence choisie pour que la taille de chaque instruction, c'est-à-dire le nombre de bits occupés par l'instruction dans la mémoire 116, soit un multiple de la taille des emplacements 510. Dans l'exemple représenté, des instructions 520 occupent un seul emplacement 510, et des instructions 522 occupent deux emplacements 510. Des instructions peuvent occuper un nombre d'emplacements 510 supérieur à deux. Dans l'exemple représenté, la taille des emplacements est de seize bits.

Les emplacements forment des groupes 530 d'emplacements, un seul groupe 530 étant représenté. Les groupes 530 successifs ont le même nombre d'emplacements, huit emplacements dans l'exemple représenté. Les emplacements de chaque groupe 530 sont positionnés à des adresses respectives. Dans l'exemple représenté, ces adresses, exprimées en octets, ont pour valeurs 0x...0, 0x...2, 0x...4, 0x...6, 0x...8, 0x...A, 0x...C, et 0x...E, où le préfixe "0x" signifie que les chiffres suivants sont en notation hexadécimale, et "..." représente des chiffres non détaillés dépendant du groupe 530 considéré. On a en outre représenté le compteur de programme PC lorsqu'une instruction positionnée à l'adresse 0x...4 est exécutée.

La mémoire 152 de stockage de trace comprend des emplacements 540. Un seul emplacement 540 est représenté. De préférence, les emplacements 540 sont des emplacements de mots mémoire, c'est-à-dire que chaque emplacement 540 a la taille d'un mot de la mémoire 152. Dans l'exemple représenté, chaque emplacement 540 a une taille de seize bits. Ainsi, l'adresse de l'emplacement 540 dans la mémoire 152 est représentée par la valeur des bits PC[>3] du compteur de programme PC de rang strictement supérieur à trois, les rangs des bits étant définis en partant de zéro à partir du bit de poids le plus faible.

Chaque zone 154 de la mémoire 152 est au moins en partie comprise dans un des emplacements 540. Les zones 154 sélectionnées à partir d'instructions occupant un même groupe 530 de la mémoire 116 occupent un même emplacement 540 de la mémoire 152. Plus précisément, pour chaque instruction, la zone 154 associée à l'instruction comprend un même nombre N de bits pour chacun des emplacements 510 occupés par l'instruction. Autrement dit, la zone 154 comprend pour chaque emplacement une sous-partie 550 de N bits. Ainsi, pour chaque instruction, la taille de la zone 154 associée est le résultat de la multiplication du nombre N par le nombre d'emplacements occupés par l'instruction. Dans un exemple non représenté, le nombre N est égal à un. Dans l'exemple représenté, le nombre N est égal à deux. Ainsi, dans l'exemple représenté, la position de la zone 154 dans l'emplacement 540 est définie par les trois bits PC[3:1] de poids les plus faibles du compteur de programme PC.

Dans une variante, les zones 154 sélectionnées à partir d'instructions de tailles différentes ont le même nombre de bits. Cependant, par rapport à une telle variante, le fait de prévoir un même nombre de bits N des zones 154 pour chaque emplacement 510 permet de simplifier la manière de sélectionner les zones 154 à partir des positions des instructions, comme ceci est illustré dans l'exemple ci-dessus d'utilisation des bits du compteur PC.

De préférence, lorsqu'une instruction occupant plusieurs emplacements est exécutée, la valeur écrite dans la zone 154 comprend des mêmes bits dans chacune des sous-parties 550. Autrement dit, on écrit des mêmes valeurs de bits dans les sous-parties 550 de la zone 154. Par exemple, dans le cas de sous-parties 550 à un seul bit et de contenus de la mémoire 152 à la valeur nulle avant exécution du programme, on met à la valeur un tous les bits de la zone 154.

En variante, on écrit une valeur uniquement dans une des sous-parties 550 de la zone 154, par exemple la sous-partie de poids faible de la zone 154 considérée. Cependant, par rapport à une telle variante, le fait d'écrire les mêmes bits dans les sous-parties 550 permet d'éviter que, dans la trace obtenue, des parties de la mémoire 152 contenant la valeur nulle correspondent en fait à des emplacements d'instructions exécutées. On facilite ainsi l'utilisation de la trace pour détecter les instructions non exécutées.

Pour écrire une valeur dans la zone 154 associée à l'instruction exécutée, on écrit dans l'emplacement 540 un mot comprenant en dehors de la zone 154 considérée le contenu de l'emplacement 540 avant écriture. Ainsi, en dehors de la zone 154 associée à l'instruction exécutée, le contenu de l'emplacement 540 n'est pas modifié lors de cette écriture. Ceci permet d'écrire la valeur dans la zone 154 considérée sans modifier les contenus des autres zones 154. Pour cela, dans le cas où le contenu de l'emplacement 540 est à la valeur nulle avant exécution du programme, la mémoire 152 est par exemple configurée pour que seuls des bits non masqués soient écrits dans chacun des emplacements. On peut utiliser un masque ayant des bits nuls en dehors des bits à écrire. L'écriture est alors réalisée en utilisant un mot contenant des bits nuls en dehors de la zone 154 considérée, et en utilisant le mot à écrire comme masque. De préférence, la mémoire est configurée pour que seuls les bits ayant la valeur non nulle soient écrits dans l'emplacement 540 considéré, les autres emplacements étant laissés à la valeur nulle. En variante, on peut mettre en oeuvre une fonction OU bit à bit avec le contenu de l'emplacement 540 avant écriture. Le mot utilisé joue ainsi également le rôle d'un masque. Cependant, par rapport à une telle variante, l'utilisation d'une mémoire de la manière décrite ci-dessus permet d'éviter un accès en lecture à la mémoire, et permet donc d'écrire plus rapidement la valeur souhaitée dans la zone 154.

Selon un mode de réalisation, plusieurs instructions d'un même groupe sont exécutées simultanément. On écrit alors un mot comprenant, en dehors des zones 154 associées à ces instructions, le contenu de l'emplacement 540 avant écriture. De préférence, chaque emplacement de mot 540 comprend plusieurs zones 154. Ceci permet d'écrire simultanément dans toutes les zones 154 associées aux instructions exécutées simultanément. On peut ainsi facilement obtenir la trace simultanément à l'exécution du programme.

Bien que l'on ait représenté des emplacements de mot 540 de seize bits, les modes de réalisation décrits sont compatibles avec d'autres tailles des emplacements 540. Le nombre d'emplacements 510 de chaque groupe 530 est alors défini en fonction de la taille des emplacements 540 et du nombre N, de sorte que les zones 154 associées aux instructions d'un même groupe occupent entièrement un seul emplacement 540. En particulier, dans un mode de réalisation préféré, différent de l'exemple représenté, chaque emplacement 540 a 32 bits, et chaque groupe 530 a 16 emplacements.

Pour certaines des instructions (G?I), l'exécution de l'instruction peut dépendre de la valeur booléenne d'un prédicat (predicate), dit encore protection (guard). L'instruction est alors dénommée instruction à prédicat (predicated instruction) ou instruction protégée (guarded instruction). De telles instructions à prédicat permettent par exemple que l'exécution de parties du programme dépende de résultats de tests conditionnels, sans pour cela effectuer de sauts conditionnels entre des parties du programme. Pour d'autres instructions du programme (I), l'exécution ne dépend pas d'un prédicat.

Dans le cas d'un programme comprenant des instructions à prédicat, on préfère que le nombre N soit égal à 2, comme dans l'exemple représenté. La valeur écrite dans la zone 154 associée à une instruction exécutée comprend donc, pour chaque sous-partie 550, des premier et deuxième bits, par exemple un bit de poids faible et un bit de poids fort. De préférence, le premier bit est mis à la valeur un si le prédicat est à la valeur "vrai", et le deuxième bit est mis à la valeur un si le prédicat est à la valeur "faux". De préférence, pour une instruction sans prédicat, les premier et deuxième bits sont tous deux mis à la valeur un.

De préférence, pour écrire la valeur dans la zone 154, on écrit dans l'emplacement 540 un mot comprenant, en dehors des bits mis à la valeur un, le contenu de l'emplacement 540 avant écriture. Pour cela, de préférence, le contenu de l'emplacement après écriture résulte d'une fonction OU bit à bit entre le contenu de l'emplacement avant écriture et un masque comprenant des bits à la valeur zéro en dehors des bits à mettre à la valeur un.

Du fait que les sous-parties 550 sont constitués de deux bits, on peut obtenir une trace permettant de distinguer entre les instructions n'ayant pas été exécutées, les instructions ayant été exécutées seulement pour leur prédicat à la valeur "vrai", les instructions ayant été exécutées seulement pour leur prédicat à la valeur "faux", et les instructions ayant été exécutées pour les deux valeurs de leur prédicat. On peut, en même temps, bénéficier des avantages des instructions à prédicat, telles qu'un gain en rapidité dans l'exécution de certaines boucles du programme et une simplification de la gestion des branchements conditionnels du programme.

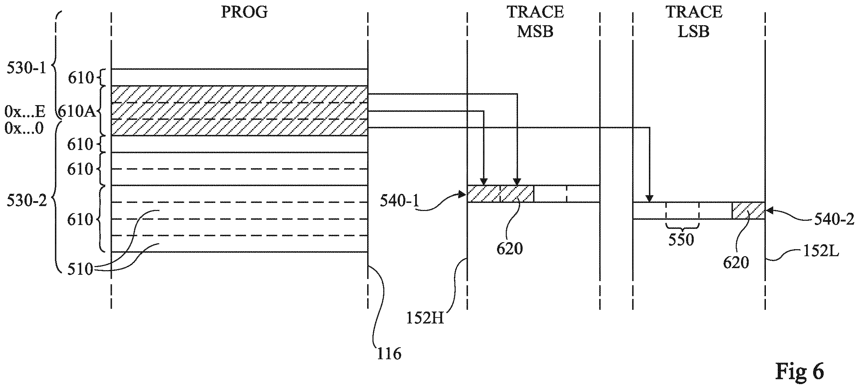

La figure 6 représente, par une vue partielle et schématique d'un mode de réalisation des mémoires de programme 116 et de stockage de trace 152 du dispositif de la figure 1, un autre mode de réalisation du procédé de la figure 2. Le mode de réalisation de la figure 6 reprend des éléments, identiques ou similaires, à ceux du mode de réalisation de la figure 5. Ces éléments ne sont pas décrits à nouveau en détails et seules les différences sont mises en exergue.

La mémoire 152 comprend deux banques de mémoire distinctes 152H (TRACE MSB) et 152L (TRACE LSB). Plus préférentiellement, les banques 152H et 152L correspondent respectivement à des bits de poids forts et à des bits de poids faibles des emplacements 540 de la mémoire 152. Comme en figure 5, on a représenté un exemple d'emplacement 540 de huit bits. Cependant, les emplacements 540 ont de préférence 16 bits.

Comme dans le mode de réalisation de la figure 5, le programme peut comprendre des instructions de plusieurs tailles différentes, par exemple de 16, 32 et 48 bits, occupant plusieurs emplacements 510 de la mémoire de programme 116. Par ailleurs, des instructions peuvent être exécutées en parallèle. Autrement dit, des parties 610 de la mémoire de programme 116 comprennent chacune un ou plusieurs emplacements 510, et, dans chaque partie 610 comprenant plusieurs instructions, les instructions sont exécutées simultanément. Chaque partie 610 est alors associée à une ou des zones 154 de la mémoire 152 dans lesquelles on souhaite écrire des valeurs simultanément.

On a représenté, parmi les parties 610, une partie 610A située à cheval entre des groupes 530 distincts (530-1 et 530-2) d'emplacements 510 de la mémoire 116. La ou les zones 154 associées à la partie 610A sont dans une partie 620 de la mémoire 152 située à cheval sur des emplacements 540 distincts (540-1 et 540-2).

Les bits de la partie 620 situés dans l'emplacement 540-1 sont situés dans la banque 152H et les bits de la partie 620 situés dans l'emplacement 540-2 sont situés dans la banque 152L. Du fait que ces banques sont distinctes, on peut écrire des valeurs correspondant aux zones 154 associées à la partie 610A en cours d'exécution simultanément dans les emplacements distincts 540-1 et 540-2.

Par rapport au mode de réalisation de la figure 5, le fait de réaliser le stockage simultanément dans les emplacements distincts 540-1 et 540-2 permet d'éviter de réaliser séquentiellement les deux stockages pendant que les instructions de la partie 610A sont exécutées. On permet ainsi avantageusement l'utilisation de mémoires moins rapides que la mémoire 152 et/ou on évite de prévoir que le programme ne contienne pas de partie 610A à cheval entre deux groupes 530 d'emplacements 510.

Bien qu'un mode de réalisation comprenant deux banques mémoire ait été décrit, ce mode de réalisation est compatible avec un nombre supérieur de banques mémoire, chacune comprenant des bits de poids différents parmi les bits des emplacements 540.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art.

Enfin, la mise en oeuvre pratique des modes de réalisation et variantes décrits est à la portée de l'homme du métier à partir des indications fonctionnelles données ci-dessus.

## Revendications

1. Procédé apte à détecter des instructions exécutées et/ou non exécutées d'un programme, comprenant une étape de sélection de zones mémoire (154) dans une mémoire de stockage de trace (152) à partir de positions, dans une mémoire de programme (116), d'instructions d'un programme de manière à associer à chacune desdites instructions l'une des zones mémoire, une zone mémoire étant associée à une seule instruction, les instructions occupant chacune un ou plusieurs emplacements (510) de la mémoire de programme (116), et chaque zone mémoire (154) comprenant pour chaque emplacement (510) occupé par l'instruction dans la mémoire de programme (116) un même nombre de bits (N), de préférence égal à un ou deux, la mémoire de stockage de trace (152) étant remplie de premières valeurs, ledit procédé comprenant l'exécution d'au moins une partie desdites instructions et, pour chaque instruction exécutée, le stockage d'une deuxième valeur différente de la première valeur dans l'une desdites zones (154) associée à l'instruction exécutée ; et, après ladite exécution, une étape de vérification de la présence de ladite deuxième valeur dans chacune desdites zones (154) et/ou la détection de l'absence de ladite deuxième valeur dans l'une desdites zones (154).

2. Procédé selon la revendication 1, dans lequel chacune desdites zones comprend au moins un premier bit et au moins un deuxième bit, ladite deuxième valeur comprenant :
- la valeur un à l'emplacement du premier bit si l'instruction exécutée a un prédicat à la valeur "vrai" ;
- la valeur un à l'emplacement du deuxième bit si l'instruction exécutée a un prédicat à la valeur "faux" ; et
- la valeur un aux emplacements des premier et deuxième bits si l'instruction exécutée n'est pas une instruction à prédicat.

3. Procédé selon la revendication 2, dans lequel le stockage est effectué parallèlement à ladite exécution.

4. Procédé selon l'une quelconque des revendications 1 à 3, dans lequel le stockage est effectué simultanément pour des instructions exécutées simultanément.

5. Procédé selon l'une quelconque des revendications 1 à 4, dans lequel ledit stockage comprend l'écriture, à un emplacement de mot mémoire (540) comprenant au moins une desdites zones (154), d'un mot ayant, en dehors de ladite au moins une desdites zones (154), le contenu dudit emplacement de mot mémoire (540) avant l'écriture.

6. Procédé selon l'une quelconque des revendications 1 à 5, dans lequel lesdites zones (154) sont situées dans au moins deux banques mémoire (152H, 152L) distinctes.

7. Procédé selon la revendication 6, dans lequel ledit emplacement de mot mémoire (540) a des bits de poids faibles situés dans l'une des deux banques (152L) et des bits de poids forts situés dans l'autre des deux banques (152H).

8. Dispositif (110 ; 300 ; 410) configuré pour mettre en oeuvre un procédé selon l'une quelconque des revendications 1 à 7 et comprenant :
- une mémoire de programme (116) comportant les instructions d'un programme ;
- un circuit intégré (112) comprenant une unité (114) de traitement des données apte à exécuter les instructions du programme et une unité (130) de génération de trace du programme apte à générer une trace du programme ; et
- une mémoire de stockage de trace (152) destinée à recevoir la trace du programme et comportant des zones mémoire (154), la mémoire de stockage de trace (152) étant remplit de premières valeurs, l'unité (130) de génération de trace du programme étant configuré, pour chaque instruction exécutée par l'une unité (114) de traitement des données, pour : stocker une deuxième valeur différente de la première valeur dans l'une desdites zones (154) associée à l'instruction exécutée ; et
après ladite exécution, effectuer une étape de vérification de la présence de ladite deuxième valeur dans chacune desdites zones (154) et/ou la détection de l'absence de ladite deuxième valeur dans l'une desdites zones (154).

9. Dispositif (110 ; 300 ; 410) selon la revendication 8, comprenant :
- une mémoire de données (120) et/ou
- un circuit (153) de test du programme contenu dans la mémoire de programme (116).

10. Dispositif (410) selon la revendication 8 ou 9, configuré pour être relié à une mémoire extérieure (452) au circuit et pour transmettre le contenu desdites zones (154) à la mémoire extérieure (452).

11. Système (400) comprenant le dispositif (410) selon la revendication 10 et un dispositif de test (450) comprenant la mémoire extérieure (452), ledit dispositif de test étant configuré pour recevoir les contenus desdites zones (154) et écrire les contenus desdites zones (154) dans ladite mémoire extérieure (452).

12. Dispositif selon la revendication 10 dans sa dépendance à la revendication 2, configuré pour vérifier la présence de ladite deuxième valeur dans le contenu de chacune desdites zones (154) et/ou la détection de l'absence de ladite deuxième valeur dans l'un desdits contenus.

## Patentansprüche

1. Ein Verfahren, das zum Detektieren ausgeführter und/oder nicht ausgeführter Befehle eines Programms geeignet ist, aufweisend Auswählen von Speicherzonen (154) in einem Spurensicherungsspeicher (154) basierend auf Positionen, in einem Programmspeicher (116), von Befehlen eines Programms, so dass jeder der Befehle mit einer der Speicherzonen assoziiert ist, wobei eine Speicherzone mit einem einzelnen Befehl assoziiert ist, wobei die Befehle jeweils einen oder mehrere Plätze (510) des Programmspeichers (116) belegen, und wobei jede Speicherzone (154) für jeden Platz (510), der von dem Befehl in dem Programmspeicher (116) belegt wird, eine gleiche Anzahl von Bits (N), vorzugsweise gleich eins oder zwei, aufweist, wobei der Spurensicherungsspeicher mit ersten Werten gefüllt wird, wobei das Verfahren die Ausführung wenigstens eines Teils der Befehle aufweist und für jeden ausgeführten Befehl die Speicherung eines zweiten Wertes aufweist, der sich von dem ersten Wert in einer der Zonen (154) unterscheidet, die mit dem ausgeführten Befehl assoziiert sind; und, nach der Ausführung, einen Schritt des Überprüfens des Vorhandenseins des zweiten Wertes in jeder der Zonen (154) und/oder der Detektion des Fehlens des zweiten Wertes in einer der Zonen (154).

2. Das Verfahren nach Anspruch 1, wobei jede der Zonen wenigstens ein erstes Bit und wenigstens ein zweites Bit aufweist, wobei der zweite Wert Folgendes aufweist:
- den Wert eins an dem Platz des ersten Bits, wenn der ausgeführte Befehl ein Prädikat auf den Wert "wahr" hat;
- den Wert eins an dem Platz des zweiten Bits, wenn der ausgeführte Befehl ein Prädikat für den Wert "falsch" hat; und
- den Wert eins an den Plätzen des ersten und zweiten Bits, wenn der ausgeführte Befehl kein Befehl mit Prädikat ist.

3. Das Verfahren nach Anspruch 2, wobei das Speichern parallel zur Ausführung erfolgt.

4. Das Verfahren nach einem der Ansprüche 1 bis 3, wobei das Speichern gleichzeitig für gleichzeitig ausgeführte Befehle erfolgt.

5. Das Verfahren nach einem der Ansprüche 1 bis 4, wobei das Speichern Schreiben aufweist in einen Speicherwortplatz (540), der mindestens eine der Zonen (154) aufweist, und zwar eines Wortes, das außerhalb der wenigstens einen der Zonen (154) den Inhalt des Speicherwortplatzes (540) vor dem Schreiben hat.

6. Das Verfahren nach einem der Ansprüche 1 bis 5, wobei die Zonen (154) in wenigstens zwei verschiedenen Speicherbänken (152H, 152L) angeordnet sind.

7. Das Verfahren nach Anspruch 6, wobei die Speicherwortposition (540) Niederwertigste Bits aufweist, die sich in einer der beiden Bänke (152L) befinden, und Höchstwertige Bits, die sich in der anderen der beiden Bänke (152H) befinden.

8. Vorrichtung (110; 300; 410), die konfiguriert ist ein Verfahren nach einem der Ansprüche 1 bis 7 auszuführen, wobei die Vorrichtung folgendes aufweist:
- einen Programmspeicher (116) aufweisend die Befehle eines Programms;
- eine integrierte Schaltung (112) aufweisend eine Datenverarbeitungseinheit (114), die zum Ausführen der Programmbefehle geeignet ist, und eine Programmspur-Erzeugungseinheit (130), die zum Erzeugen einer Programmspur geeignet ist; und
- einen Spurensicherungsspeicher (152), der dazu bestimmt ist, die Programmspur zu empfangen, und Speicherzonen (154) aufweist, wobei der Spurensicherungsspeicher (152) mit ersten Werten gefüllt ist und die Programmspur-Erzeugungseinheit (130) konfiguriert ist, für jeden von der Datenverarbeitungseinheit (114) ausgeführten Befehl, zum:
- Speichern eines zweiten Wertes, der sich von dem ersten Wert unterscheidet, in einer der Zonen, die mit dem ausgeführten Befehl assoziiert sind; und
- nach dem Ausführen, Durchführen eines Schrittes des Überprüfens des Vorhandenseins des zweiten Wertes in jeder der Zonen (154) und/oder des Detektierens des Fehlens des zweiten Wertes in einer der Zonen (154).

9. Die Vorrichtung (110; 300; 410) nach Anspruch 8, die Folgendes aufweist:
- einen Datenspeicher (120); und/oder
- eine Testschaltung (153) zum Testen von Programminhalten im Programmspeicher (116).

10. Die Vorrichtung (400) nach Anspruch 8 oder 9, die konfiguriert ist mit einem Speicher (452) außerhalb der Schaltung gekoppelt zu werden und den Inhalt der Zonen (154) an den externen Speicher (452) zu senden.

11. Ein System (400), das die Vorrichtung (410) nach Anspruch 10 und eine Prüfvorrichtung (450) aufweist, die den externen Speicher (452) aufweist, wobei die Prüfvorrichtung konfiguriert ist die Inhalte der Zonen (154) zu empfangen und die Inhalte der Zonen (154) in den externen Speicher (452) zu schreiben.

12. Die Vorrichtung nach Anspruch 10 in Abhängigkeit von Anspruch 2, die konfiguriert ist zum Überprüfen des Vorhandenseins des zweiten Wertes in dem Inhalt jeder der Zonen (154) und/oder zum Detektieren des Fehlens des zweiten Wertes in einem der Inhalte.

## Claims

1. A method suitable for detecting executed and/or nonexecuted instructions of a program, comprising selecting memory zones (154) in a trace storage memory (154) based on positions, in a program memory (116), of instructions of a program such that each of said instructions is associated with one of the memory zones, a memory zone being associated with a single instruction, the instructions each occupying one or more locations (510) of the program memory (116), and each memory zone (154) comprising, for each location (510) occupied by the instruction in the program memory (116), a same number of bits (N), preferably equal to one or two, the trace storage memory being filled with first values, the method comprising the execution of at least one part of said instructions and, for each executed instruction, the storage of a second value different from the first value in one of said zones (154) associated with the executed instruction; and, after said execution, a step of verifying the presence of said second value in each of said zones (154) and/or the detection of the absence of said second value in one of said zones (154).

2. The method according to claim 1, wherein each of said zones comprises at least one first bit and at least one second bit, said second value comprising:
- the value one in the location of the first bit if the executed instruction has a predicate to the value "true";
- the value one in the location of the second bit if the executed instruction has a predicate to the value "false"; and
- the value one in the locations of the first and second bits if the executed instruction is not an instruction with predicate.

3. The method according to claim 2, wherein the storage is done in parallel with said execution.

4. The method according to any of claims 1 to 3, wherein the storage is done simultaneously for instructions executed simultaneously.

5. The method according to any of claims 1 to 4, wherein said storage comprises writing, in a memory word location (540) comprising at least one of said zones (154), a word having, outside said at least one of said zones (154), the content of said memory word location (540) before the writing.

6. The method according to any of claims 1 to 5, wherein said zones (154) are located in at least two distinct memory banks (152H, 152L).

7. The method according to claim 6, wherein the memory word location (540) has least significant bits located in one of the two banks (152L) and most significant bits located in the other of the two banks (152H).

8. A device (110; 300; 410) configured to carry out a method according to any of claims 1 to 7, and comprising:
- a program memory (116) comprising the instructions of a program;
- an integrated circuit (112) comprising a data processing unit (114) suitable for executing the program instructions and a program trace generation unit (130) suitable for generating a program trace; and
- a trace storage memory (152) destined to receive the program trace and comprising memory zones (154), the trace storage memory (152) being filled with first values, the program trace generation unit (130) being configured, for each instruction executed by the date processing unit (114), to:
- store a second value different from the first value in one of said zones associated with the executed instruction; and
- after said execution, perform a step of verifying the presence of the second value in each of said zones (154) and/or of detecting the absence of said second value in one of said zones (154).

9. The device (110; 300; 410) according to claim 8, comprising:
- a data memory (120); and/or
- a test circuit (153) for testing program content in the program memory (116).

10. The device (400) according to claim 8 or 9, configured to be coupled to a memory (452) external the circuit and to transmit the content of said zones (154) to the external memory (452).

11. A system (400) comprising the device (410) according to claim 10 and a test device (450) comprising the external memory (452), said test device being configured to receive the contents of said zones (154) and to write the contents of said zones (154) in said external memory (452).

12. The device according to claim 10 when dependent on claim 2, configured to verify the presence of said second value in the content of each of said zones (154) and/or the detection of the absence of said second value in one of said contents.
